# EUROPEAN PATENT APPLICATION

(11) **EP 1 798 744 A1**
(43) Date of publication of application: **20.06.2007**
(21) Application number: 06011495.6
(22) Date of filing: 02.06.2006
(51) Int. Cl.: H01H 9/00, H02B 11/10

(54) **Control circuit connecting apparatus for drawer type circuit breaker**

(30) Priority: 16.12.2005 JP 2005363050
(71) Applicant: MITSUBISHI DENKI KABUSHIKI KAISHA, Chiyoda-ku, Tokyo 100-8310 (JP)
(72) Inventor: Tokunaga, Yoshihiro, c/o Mitsubishi Electric Engineering Co., Ltd., Chiyoda-ku Tokyo (JP); Uesako, Akihiko, c/o Mitsubishi Electric Engineering Co., Ltd., Chiyoda-ku Tokyo (JP)
(74) Representative: HOFFMANN EITLE

(57) **Abstract**

In a control circuit connecting apparatus for a drawer type circuit breaker (101), the position of a main circuit terminal (12) of a circuit breaker body (11) is set to a testing position and then to a disconnecting position in accordance with an amount of drawing out from a drawer frame (21) from a connecting position in which the main circuit terminal is in contact with a main circuit conductor on distribution line side (22). In the connecting position and the testing position, the control circuit connecting apparatus for the drawer type circuit breaker electrically conducts a connector (13L, 13R) of a housing (13) being in an electrically connected state, a normally closed auxiliary contact (15) of the circuit breaker body holding a conductive state when a main circuit contact is open through a contact (23L, 23R) of a terminal block (23), and an electric circuit provided outside the circuit breaker body. A switch (31) is installed in a vicinity of a terminal of the terminal block to which the electric circuit is connected, the switch being adapted to electrically conduct at the disconnecting position in which the connector and the contact are in an electrically disconnected state, to thereby maintain a function of the electric circuit.

## Description

### BACKGROUND OF THE INVENTION

### 1. Field of the Invention

The present invention relates to a drawer type circuit breaker incorporating a normally closed auxiliary contact, and more particularly to a control circuit connecting apparatus for a drawer type circuit breaker which maintains conduction between a normally closed auxiliary contact and an electric circuit provided on the outside of the drawer type circuit breaker connected to this normally closed auxiliary contact, irrespective of the position of the drawer type circuit breaker.

### 2. Description of the Related Art

The drawer type circuit breaker is used in a distribution system in such as a building or a factory. In this distribution system, in a state in which electric power is being supplied from a power supplying side to a load in the building or the factory through the drawer type circuit breaker, the circuit breaker body is in a "connecting state" in which it is pushed in a drawer frame. At the time of the testing of such as the sequence of a circuit breaker control circuit, the circuit breaker body is drawn out to a "testing position." At the time of inspection of the circuit breaker body, the circuit breaker body is further drawn out from the "testing position" to a "disconnecting position, and the circuit breaker body can be further drawn out and removed from the drawer frame (e. g. , refer to JP-A-6-223702 (page 2, left column, line 40 to right column, line 16, Figs. 5 to 7)).

In not only such drawer type circuit breakers but circuit breakers in general, there is a case where an auxiliary contact which is interlocked with the closing and opening of the contact of this circuit breaker is incorporated. By making use of a signal output of this auxiliary contact, it is possible to allow the operating condition of the circuit breaker and, hence, the load to be electrically displayed in the outside, e.g., a centralized monitoring room. This auxiliary contact is generally comprised of a normally open contact (also called an "a" contact) which is open when the circuit breaker is OFF or tripped and which is closed when the circuit breaker is ON, and a normally closed contact (also called a "b" contact) which is closed when the circuit breaker is OFF or tripped and which is open when the circuit breaker is ON. To put it simply, the movement of the "a" contact is the same as that of the circuit breaker, whereas the movement of the "b" contact is opposite to that of the circuit breaker.

A description will be given of a specific example in which this normally closed contact is practically used. In a case where the condition of turning ON a circuit breaker A of two circuit breakers A and B is that the circuit breaker B is OFF (or tripped), the circuit breaker A is provided with an undervoltage trip device (hereafter abbreviated as the UVT), while the circuit breaker B is provided with a normally closed contact, and a predetermined supply voltage (hereafter referred to as a power supply) is supplied to the UVT through this normally closed contact. Accordingly, when the circuit breaker B is ON, the normally closed contact is open, i.e., the power supply is not supplied (in other words, the UVT recognizes an undervoltage), so that the circuit breaker A cannot be turned ON. However, if the circuit breaker B is OFF (or tripped), the normally closed contact is closed, i.e. , the power supply is being supplied to the UVT, so that the circuit breaker A can be turned ON. Thus, the normally closed contact is used for a so-called electrical interlock between circuit breakers.

In a case where these circuit breakers A and B are drawer type circuit breakers, if, for example, the circuit breaker B in the OFF state is drawn to the "disconnecting position" for the purpose of inspection, although there is no change in the normally closed contact, the state of connection between a housing on the circuit breaker side and a terminal block on the drawer frame side, which relays this normally closed contact, the UVT of the circuit breaker A, and the power supply, ceases to be maintained. As a result, there occurs the problem that the normally closed contact becomes apparently open, i.e. , the power supply ceases to be supplied to the UVT, thereby tripping the circuit breaker A.

To prevent this sudden trip of the circuit breaker A, when the circuit breaker B having the normally closed contact is drawn out from the drawer frame, if an insertion piece of a secondary plug on the closed type distribution board side is removed from a secondary plug on the circuit breaker side which is a normally closed contact, a short-circuiting piece similarly provided on the secondary plug short circuits the contact piece by means of the repulsion of a spring provided on the secondary plug, thereby ensuring that the function of the normally closed contact will not be impaired. Accordingly, the power supply is continued to be supplied to the UVT connected to this normally closed contact (e.g., refer to JP-UM-A-56-63211 (page 3, line 18 to page 4, line 5, Figs. 1 to 3)).

### SUMMARY OF THE INVENTION

In the conventional control circuit connecting apparatus for a drawer type circuit breaker, since the maintenance of the function of the normally closed contact is provided on the circuit breaker side, electrical connection is continued to be required between the circuit breaker drawn out for inspection, for instance, and the circuit breaker whose ON state is desirably maintained. In this case, the supply of the power supply to the UVT relies on the normally closed contact itself, although the accuracy of the electrical interlock cannot be denied, there has been a risk that operational safety becomes a problem because of the operational restriction in that the circuit breaker being inspected cannot be turned ON indiscreetly, and because, even on the control circuit side, an active line is essentially requested for the circuit breaker being tested.

This invention has been devised to overcome the above-described problems, and its object is to provide a control circuit connecting apparatus for a drawer type circuit breaker in which even if the circuit breaker concerning the electrical interlock is drawn out from the drawer frame, the drawn-out circuit breaker is not involved in the electrical interlock.

According to an aspect of the present invention, a control circuit connecting apparatus for a drawer type circuit breaker, which includes a drawer frame including a terminal block having a contact and a main circuit conductor on distribution line side, and a circuit breaker body including a housing having a connector, a main circuit terminal and a normally closed auxiliary contact. A position of the main circuit terminal is set to a testing position and to a disconnecting position in accordance with an amount of drawing out of the circuit breaker body from the drawer frame from a connecting position in which the main circuit terminal is in contact with the main circuit conductor on distribution line side. The connector and the contact are in an electrically connected state in the connecting position and the testing position. The control circuit connecting apparatus for a drawer type circuit breaker conducts the normally closed auxiliary contact of the circuit breaker body, which holds a conductive state through the connector and the contact, and an electric circuit provided outside the circuit breaker body. In the disconnecting position, in which the connector and the contact are in an electrically disconnected state, a switch installed in a vicinity of a terminal of the terminal block, to which the electric circuit is connected, is electrically conducted, to thereby maintain a function of the electric circuit.

As described above, according to the invention, even in cases where the circuit breaker concerning the electrical interlock is drawn out to perform inspecting operation, for example, no restriction, is imposed on the inspection itself, and the operational safety is not impaired.

### BRIEF DESCRIPTION OF THE DRAWINGS

Fig. 1 is a perspective view of a drawer type circuit breaker at a disconnecting position in accordance with a first embodiment of the invention;
Figs. 2A and 2B are side elevational views of Fig. 1, in which Fig. 2A illustrates the disconnecting position in the same way as Fig. 1, and Fig. 2B illustrates a connecting position;
Figs. 3A and 3B are diagrams illustrating a terminal block in Fig. 1, in which Fig. 3A is a view taken in the direction of D in Fig. 2A, and Fig. 3B is a cross-sectional view taken along line E - E in Fig. 3A;
Figs. 4A and 4B are diagrams illustrating a housing in Fig. 1, in which Fig. 4A is a cross-sectional view taken along line A - A, and Fig. 4B is a cross-sectional view taken along line B - B;
Fig. 5 is an exploded perspective view of a switch in accordance with the first embodiment of the invention;
Figs. 6A to 6D are diagrams in which this switch is mounted on the terminal block in Fig. 1, in which Figs. 6A and 6B are views taken in the direction of C and the direction of D, respectively, in Fig. 2A, and Figs. 6C and 6D are cross-sectional views taken along line F - F and line G - G, respectively, in Fig. 6B;
Fig. 7 is a view corresponding to Fig. 6C in which the housing is inserted;
Figs. 8A to 8C are schematic diagrams of the electrical wiring in accordance with the first embodiment of the invention, in which Fig. 8A shows the connecting position, Fig. 8B a testing position, and Fig. 8C the disconnecting position, respectively; and
Fig. 9 is an external perspective view of the switch in accordance with a second embodiment of the invention.

### DETAILED DESCRIPTION OF THE INVENTION

### First Embodiment

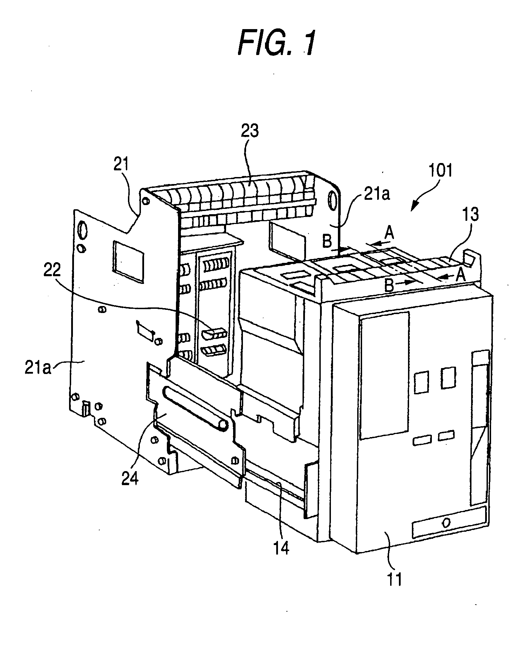

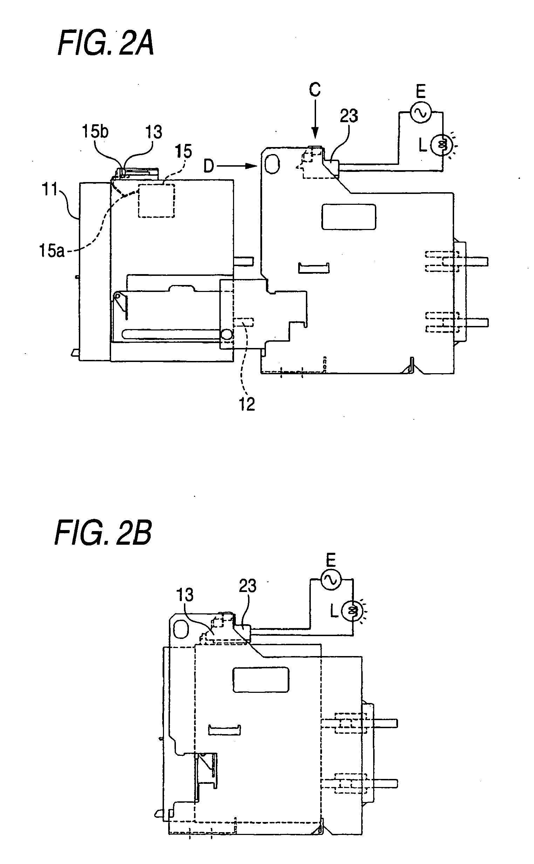

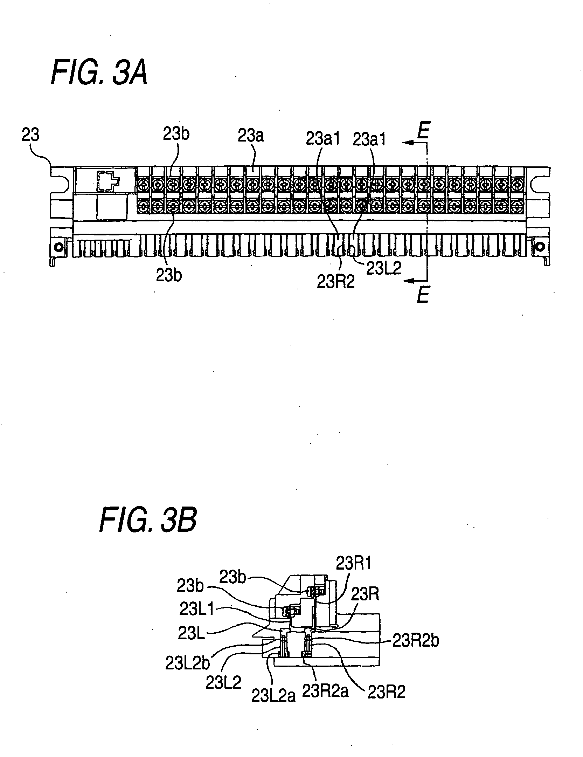

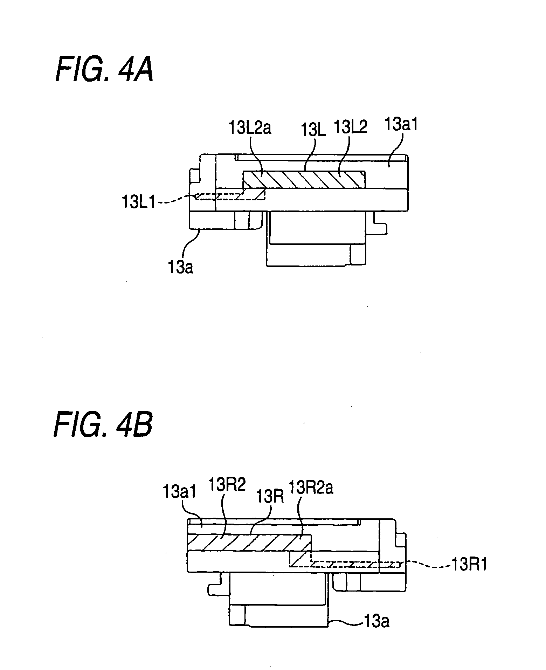

Fig. 1 is a perspective view of a drawer type circuit breaker at a disconnecting position in accordance with a first embodiment of the invention. Figs. 2A and 2B are side elevational views of Fig. 1, in which Fig. 2A illustrates the disconnecting position in the same way as Fig. 1, and Fig. 2B illustrates a connecting position. In addition, Figs. 3A and 3B are diagrams illustrating a terminal block, in which Fig. 3A is a view taken in the direction of D in Fig. 2A, and Fig. 3B is a cross-sectional view taken along line E - E in Fig. 3A. Figs. 4A and 4B are diagrams illustrating a housing, in which Fig. 4A is a cross-sectional view taken along line A - A in Fig. 1, and Fig. 4B is a cross-sectional view taken along line B - B in Fig. 1.

As shown in Fig. 1, a drawer type circuit breaker 101 is comprised of a circuit breaker body 11 and a drawer frame 21. The circuit breaker body 11 can be moved, along a pair of slide frames 24 of the drawer frame 21 respectively fitted in a pair of slide grooves 14 of the circuit breaker body 11, from a "connecting position" in which all of main circuit terminals 12 (see Fig. 2A) of the circuit breaker body 11, distribution line-side main circuit conductor 22 provided on the drawer frame 21, a housing 13 provided on the circuit breaker body 11, and a terminal block 23 provided on the drawer frame 21 are in a connected state, to a "testing position" in which only the housing 13 and the terminal block 23 are in the connected state, and further to a "disconnecting position" (illustrated state) in which all of them are in a disconnected state. It should be noted that in the "connecting position," it is possible to perform the electrically opening/closing operation of the circuit breaker body 11, and electric power can be supplied to a load. In the "testing position, " electric power cannot be supplied to the load, but since the housing 13 and the terminal block 23 are still connected, it is possible to perform not only the aforementioned electrically opening/closing operation but also the monitoring of the state of the circuit breaker body 11, which constitutes a feature of the invention. In the "disconnecting position," neither the supply of electric power nor the electrically opening/closing operation can be performed, but since there is no risk of electrification by the circuit breaker body 11 itself, the inspection and maintenance of the circuit breaker body 11 is possible. These are matters which are well known.

As shown in Fig. 2A, a normally closed auxiliary contact 15 is incorporated in the circuit breaker body 11, and a plug 15b provided at a tip of a lead wire 15a of this normally closed auxiliary contact 15 is inserted in and connected to the housing 13. Here, if the circuit breaker body 11 is OFF or tripped, the normally closed auxiliary contact is closed, as described above. However, in the "connecting position" (i.e., the state of Fig. 2B) in which the housing 13 and the terminal block 23 are in the connected state, if a power supply E and a load such as an electric lamp L (although the UVT of another circuit breaker is appropriate in the case of the combination with the normally closed auxiliary contact 15, as described in the section on the background art, the electric lamp is used herein to facilitate the description) are series connected to terminals 23b and 23b of the terminal block 23 which are in the conductive state with the plug 15b, the electric lamp L naturally lights up. However, since the housing 13 and the terminal block 23 are in the disconnected state, the electric lamp does not light up in this state. The main point of this invention lies in that a measure is taken to light the electric lamp L even in this state of this Fig. 2A, i.e., the "disconnecting position." Accordingly, a description will be given hereafter centering on the housing 13 and the terminal block 23.

As shown in Fig. 3A, the terminal block 23 has a terminal base 23a which is an insulator of a length corresponding to the interval between both upright side plates 21a and 21a (see Fig. 1) of the drawer frame 21. As the plurality of pairs (in this embodiment, 25 pairs) of terminals 23b and 23b are provided on this terminal base 23a, it is possible to supply power supplies to a multiplicity of accessories including a closing coil, a shunt tripping device, a UVT, and an alarm switch which are incorporated in the circuit breaker body 11, as well as an auxiliary switch in accordance with the invention

As shown in Fig. 3B, unillustrated conductors (or crimp-type terminals) of such as these power supplies electrically conduct with contacts 23L and 23R through the terminals 23b and 23b. This contact 23L (the same applies to 23R as well) consists of a receiving portion 23L1 which is a portion to be connected to the conductor, as well as a connecting portion 23L2 bent substantially 90 degrees from this receiving portion 23L1. The connecting portion 23L2 has a first contact portion 23L2a and a second contact portion 23L2b. Since these contact portions of the contacts 23L and 23R have spring properties and oppose each other (see Fig. 3A as well), the contact 23L is disposed on this side, as viewed in a direction perpendicular to the plane of the drawing of Fig. 3B, while the contact 23R is disposed on the farther side. It should be noted that the subscripts L and R of the contacts 23L and 23R will be so called by using this Fig. 3B as a reference for the convenience sake, but as for L and R in numbered items other than these contacts 23L and 23R, it is assumed that L's or R's are brought into electrical contact with each other.

In addition, as shown in Fig. 3A, the terminal base 23a has guides 23a1 which are respectively positioned on the rear surfaces of the connecting portions 23L2 and 23R2. These two adj acent guides 23a1 and the ceiling (not numbered) form a space which penetrates from this side toward the farther side as viewed in the direction perpendicular to the plane of the drawing.

Next, a description will be given of the housing 13. The housing 13 provided on the circuit breaker body 11, as described before, has a housing portion 13a, which is not shown in Figs. 3A and 3B and is an insulator of a length substantially equal to that of the terminal block 23 (see Fig. 3A) . As the circuit breaker body 11 is moved in the rightward direction in Fig. 2A, the housing 13 is engaged with the terminal base 23a. Specifically, a partition wall 13a1 shown in Figs. 4A and 4B is inserted an fitted into each aforementioned space provided in the terminal base 23a. This partition wall 13a1 is provided in a number equal to the number of spaces, and connectors 13L and 13R are respectively disposed on both side surfaces of the respective partition wall 13a1. This connector 13L (the same applies to 13R as well) consists of a distal end 13L1 and a contact surface 13L2, and the first contact portion 23L2a slides on the contact surface 13L2 at the time of insertion and fitting into the space. As is apparent from these Figs. 4A and 4B, first contact portions 13L2a and 13R2a, which are the distal end 13L1 and 13R1 sides of both contact surfaces 13L2 an 13R2, are not symmetrical about the partition wall 13a1 . The reason for this is that the first contact portions 23L2a and 23R2a are offset, as already explained with reference to Fig. 3B. Namely, in the "connecting position" and the "testing position" of the drawer type circuit breaker 101, the respective first contact portions, i.e., 13L2a and 23L2a, as well as 13R2a and 23R2a, are in electrical contact with each other. It should be noted that the aforementioned distal ends 13L1 and 13R1 are connected to the plug 15b. In the foregoing description, the electrical wiring from the power supply E and the electric lamp L (see Fig. 2A) to the normally closed auxiliary contact 15 (see Fig. 2A) is completed.

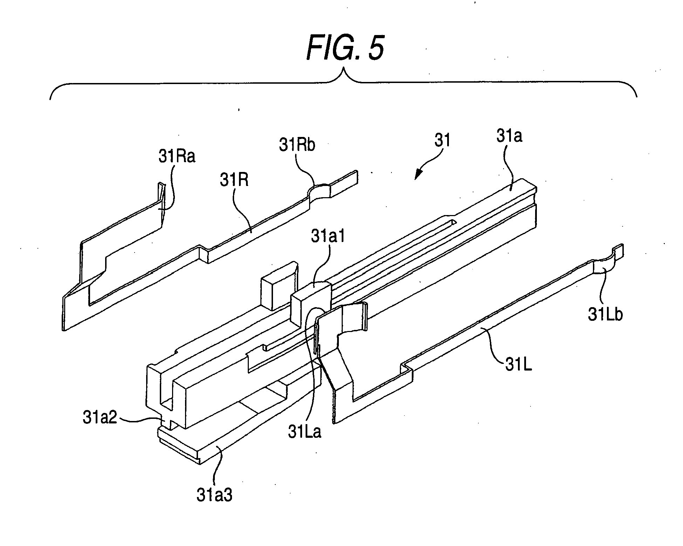

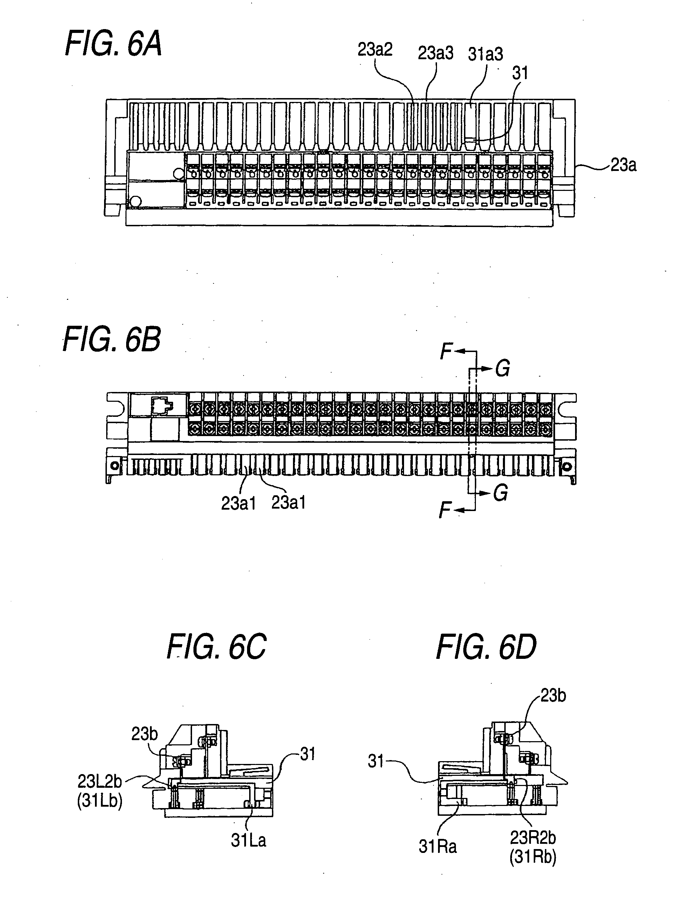

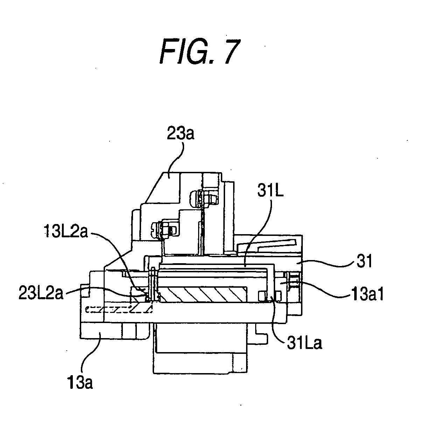

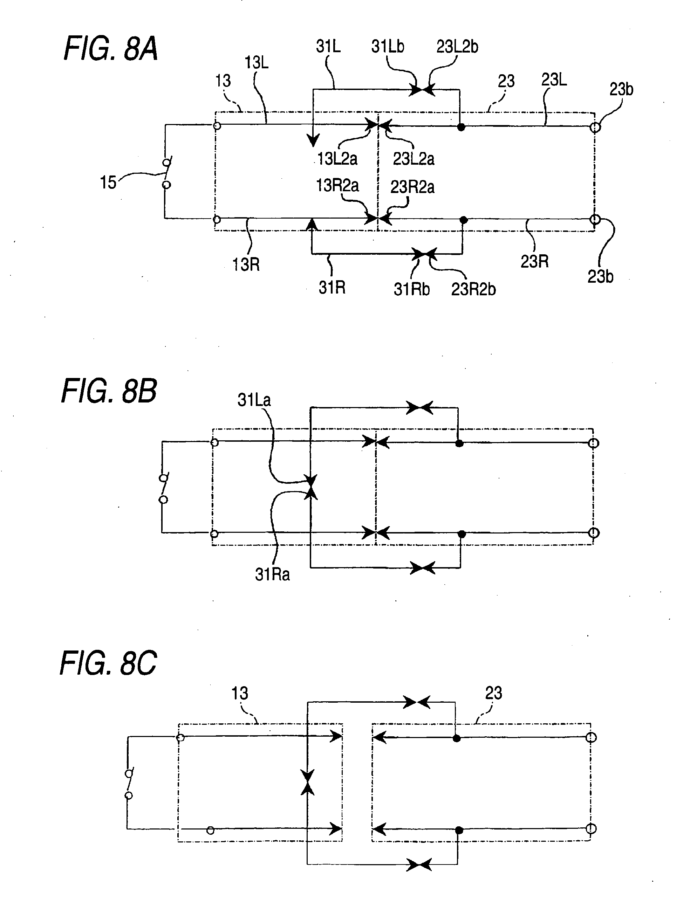

Next, a description will be given of a switch 31 which is an essential part of the invention. It should be noted that Fig. 5 is an exploded perspective view of the switch, and Figs. 6A to 6D are diagrams in which this switch is mounted on the terminal block. Figs. 6A and 6B are views taken in the direction of C and the direction of D, respectively, in Fig. 2A. Figs. 6C and 6D are cross-sectional views taken along line F - F and line G - G, respectively, in Fig. 6B. Fig. 7 is a view corresponding to Fig. 6C in which the housing is inserted, and Figs. 8A to 8C are schematic diagrams of the electrical wiring, in which Fig. 8A shows the connecting position, Fig. 8B the testing position, and Fig. 8C the disconnecting position, respectively.

As shown in Fig. 5, the switch 31 consists of a holder 31a, which is an insulator, and leaf springs 31L and 31R. The leaf spring 31L (the same applies to 31R as well) is substantially L-shaped, and a long side portion of this substantially L-shaped portion is fitted into a recess provided in the holder 31a, thereby forming the switch 31. A second contact portion 31Lb is provided at a distal end of the long side portion, while a first contact portion 31La is provided at a distal end of the short side portion. Meanwhile, a pair of guide portions 31a1, a protrusion 31a2, and a snap-fit portion 31a3 provided on this protrusion 31a2 are respectively provided on the holder 31a. It should be noted that, as can be seen from this drawing, the distal ends of the first contact portions 31La and 31Ra are flared outwardly with respect to the axially extending center of the holder 31a, and these first contact portions 31La and 31Ra are in electrical contact with each other in the state in which the leaf springs 31L and 31R are fitted in the holder 31a.

Next, a description will be given of a method of mounting this switch 31. As described before, a space is formed by the two adjacent guides 23a1 and the ceiling, and a slit 23a2 is provided in each of these ceilings, as shown in Fig. 6A (in this embodiment, the slits 23a2 correspond to sixth to 10th ceilings from the right in the drawing). The switch 31 is inserted into the space (the sixth space from the right in this embodiment) provided with this slit 23a2, from the upper direction in the drawing with the snap-fit portion facing the upper side (i.e., the portion which is away from the snap-fit portion 31a3 is inserted into the space). Since the shape of the space conforms to the shape of the holder 31a and the slit 23a2 serves as escape for the protrusion 31a2, the switch is able to advance further downward in the drawing. Then, the snap-fit portion 31a3 having the spring properties is engaged with a stopper 23a3 of the terminal base 23a, thereby allowing the switch 31 to be retained at a predetermined position. It should be noted that if the snap-fit portion 31a3 is pressed, the switch 31 can be removed, so that this switch 31 is detachably insertable.

As shown in Figs. 6C and 6D, when the switch 31 is retained at the predetermined position, the second contact portions 31Lb and 31Rb are respectively brought into electrical contact with the second contact portions 23L2b and 23R2b. Accordingly, it can be seen that the terminals 23b and 23b are in a short-circuited state through the contacts and leaf springs, specifically through a route including 23L2b, 31Lb, 31La, 31Ra, 31Rb, and 23R2b, coupled with the fact that the first contact portions 31La and 31Ra are in electrical contact with each other.

In the process of transition from the so-called "testing position" to the "connecting position" in which the housing 13 engages the terminal base 23 by being moved from this state, i.e., the state in which the switch 31 is fitted, the partition wall 13a1 is inserted into the space, as described above. As a result, this partition wall 13a1 enters between the first contact portions 31La and 31Ra, which are in a state of contact, with the guide portions 31a1 literally serving as guides. Then, as shown in Fig. 7, as the first contact portion 31La comes into contact with the partition wall 13a1, the current path through this leaf spring 31L is disconnected. However, in this "connecting position," the current path is secured through 23L2a to 13L2a and 23R2a to 13R2a, as described above, no hindrance is caused to the lighting state of the electric lamp L.

To summarize the above description with reference to Figs. 8A to 8C, first, in the "connecting position" (Fig. 8A), since the housing 13 and the terminal block 23 are connected, as described above, it can be understood that the terminals 23b and 23b are in the short-circuited state through the normally closed auxiliary contact 15. Next, in the "testing position" (Fig. 8B), it can be understood that the housing 13 and the terminal block 23 are still connected, and that the first contact portions 31La and 31Ra are in contact, i.e., the normally closed auxiliary contact 15 and the leaf springs 31L and 31R are parallel connected. Finally, in the "disconnecting position" (Fig. 8C), although the housing 13 and the terminal block 23 are disconnected, since the conduction between the leaf springs 31L and 31R in the above-described "testing position" is still in effect in this "disconnecting position, " the terminals 23b and 23b are still able to maintain the short-circuited state through these leaf springs 31L and 31R.

Accordingly, even in the "disconnecting position," i.e., in the state in which the circuit breaker body 11 is drawn out, if the switch 31, which is electrically equivalent to the normally closed auxiliary contact 15 incorporated in the circuit breaker body 11, is provided in the terminal block 23, it is possible to maintain the lighting state of the electric lamp L, and to describe it more realistically, it becomes possible to maintain an electrical interlock. Moreover, this maintenance can be attained by merely installing in the terminal block 23 the switch 31 composed by simple parts such as the holder 31a and the leaf springs 31L and 31R without using a special device, and a reduction in the manufacturing cost can be expected.

In addition, to describe the electrical interlock, the merit on the part of the user is immense in that the inspection operation can be performed safely since the circuit breaker body 11 which is drawn out is in an utterly non-energized state. Although it has been described for the sake of description that the switch is installed in the terminal block 23 in the "disconnecting position" in which the housing 13 is not connected, the position is not limited to this "disconnecting position," the switch 31 can be installed even in the "testing position" and the "connecting position," i.e., even if the housing 13 and the terminal block 23 are in the connected state.

### Second Embodiment

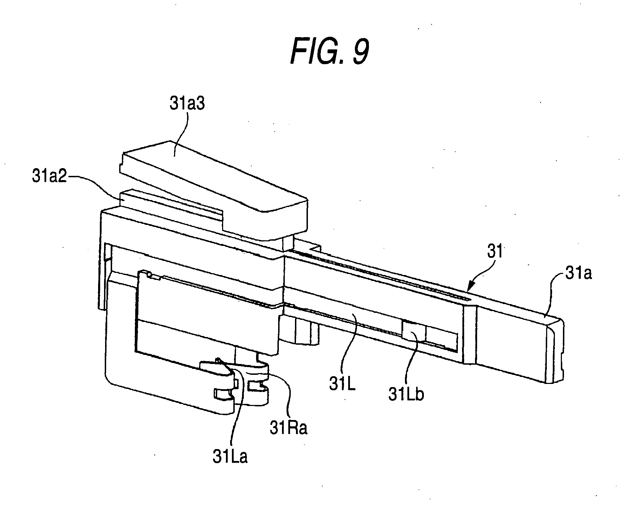

As is apparent from the foregoing description, in this invention, the important point is how to stabilize the electrical contact between the respective first contact portions 31La and 31Ra of the leaf springs 31L and 31R. An arrangement in which a further improvement is made on this contact stability will be described as a second embodiment. It should be noted that Fig. 9 is an external perspective view of the switch in accordance with the second embodiment of the invention.

In Fig. 9, a particular difference with Fig. 5 lies in the shape of the short side portion of the leaf spring 31L (the same applies to 31R as well). Namely, this short side portion is formed so as to substantially come into contact with the side surface of the guide 23a1 of the terminal base 23. In conjunction with this, the first contact portions 31La and 31Ra are so shaped that their distal ends are bent and oriented toward the axially extending center line between the pair of guide portions 31a1 so as to make a U-turn, and are flared outwardly after touching each other.

By so doing, since the short side portion constantly abuts against the side surface of the guide 23a1 irrespective of the presence or absence of the partition wall 13a1 between the first contact portions 31La and 31Ra, a change in the moving allowance of the first contact portions 31La and 31Ra due to the presence or absence of the partition wall 13a1 becomes small. Therefore, the contact stability of the both first contact portions improves further.

## Claims

1. A control circuit connecting apparatus for a drawer type circuit breaker (101), which includes:
a drawer frame (21) including:
a terminal block (23) having a contact (23L, 23R); and
a main circuit conductor on distribution line side; and
a circuit breaker body (11) including:
a housing (13) having a connector (13L, 13R);
a main circuit terminal (12); and
a normally closed auxiliary contact (15), wherein
a position of the main circuit terminal is set to a testing position and to a disconnecting position in accordance with an amount of drawing out of the circuit breaker body from the drawer frame from a connecting position in which the main circuit terminal is in contact with the main circuit conductor on distribution line side, and
the connector and the contact are in an electrically connected state in the connecting position and the testing position,
the control circuit connecting apparatus for a drawer type circuit breaker conducting the normally closed auxiliary contact of the circuit breaker body, which holds a conductive state through the connector and the contact, and an electric circuit provided outside the circuit breaker body,
**characterized in that**
in the disconnecting position, in which the connector and the contact are in an electrically disconnected state, a switch (31) installed in a vicinity of a terminal of the terminal block, to which the electric circuit is connected, is electrically conducted, to thereby maintain a function of the electric circuit.

2. The control circuit connecting apparatus for a drawer type circuit breaker according to claim 1, wherein
the switch includes:
a holder (31a) which is a substantially bar-shaped insulator having a guide portion (31a1) and a snap-fit portion (31a3); and
a pair of leaf springs (31L, 31R) which are substantially L-shaped conductors respectively fitted to both side surfaces of the holder,
second contact portions (31Lb, 31Rb) of the pair of leaf springs are brought into contact with the contact as the switch is installed in the terminal block,
first contact portions (31La, 31Ra) of the pair of leaf springs being brought into contact with each other in the testing position and the disconnecting position, and
the first contact portions of the pair of leaf springs are opened in the connecting position as a partition wall (13a1) of the housing inserted between guides (23a1) of the terminal block serving as a positioning guide upon installing the switch is interposed between the pair of leaf springs.

3. The control circuit connecting apparatus for a drawer type circuit breaker according to claim 2, wherein
the pair of leaf springs are formed such that portions of the pair of leaf springs which are not fitted to the holder substantially abut against mutually opposing surfaces of the guides of the terminal block.
